(19) Europäisches Patentamt
European Patent Office
Office européen des brevets

(11) Numéro de publication: **0 499 722 B1**

# (12) FASCICULE DE BREVET EUROPEEN

(45) Date de publication de fascicule du brevet: **01.03.95**

(51) Int. Cl.$^{6}$: **B65D 81/24**, C08L 77/02, C08L 67/02, C08K 5/09

(21) Numéro de dépôt: **91203394.1**

(22) Date de dépôt: **23.12.91**

## (54) Compositions polymériques à propriétés barrière et matériaux d'emballage façonnés à partir de ces compositions.

(30) Priorité: **08.01.91 BE 9100014**

(43) Date de publication de la demande:
**26.08.92 Bulletin 92/35**

(45) Mention de la délivrance du brevet:
**01.03.95 Bulletin 95/09**

(84) Etats contractants désignés:
**BE DE ES FR GB IT NL SE**

(56) Documents cités:
**EP-A- 0 092 979**
**EP-A- 0 301 719**

(73) Titulaire: **SOLVAY**
**Rue du Prince Albert, 33**
**B-1050 Bruxelles (BE)**

(72) Inventeur: **Momtaz, Ardéchir**
**Avenue Winston Churchill, 218**
**B-1180 Bruxelles (BE)**
Inventeur: **Gauthy, Fernand**
**Rue P. de Waet, 38**
**B-1780 Wemmel (BE)**
Inventeur: **Churin, Esteban**
**Rue du Monument, 25**
**B-1340 Ottignies (BE)**
Inventeur: **Michel, Claude**
**Avenue Marie de Hongrie, 10**
**B-1300 Wavre (BE)**

(74) Mandataire: **Husemann, Claude et al**
**SOLVAY**
**Département de la Propriété Industrielle**
**310, Rue de Ransbeek**
**B-1120 Bruxelles (BE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 499 722 B1

Rank Xerox (UK) Business Services
(3.10/3.09/3.3.3)

## Description

La présente invention concerne des compositions polymériques à propriétés barrière, plus particulièrement des compositions polymériques imperméables à l'oxygène contenant des polyamides semi-aromatiques. Elle concerne également des matériaux d'emballage, notamment de boissons et de produits alimentaires, façonnés à partir de ces compositions.

L'utilisation de polymères à propriétés barrière est actuellement pratiquée sur une vaste échelle dans la fabrication de matériaux d'emballage plastique, principalement pour l'emballage de boissons et de denrées alimentaires.

Des polymères qui constituent une barrière physique aux gaz, notamment à l'oxygène, et qui permettent donc d'augmenter la durée de conservation et de stockage des produits emballés sans altération de ces derniers, sont principalement les copolymères d'éthylène et d'alcool vinylique, les copolymères du chlorure de vinylidène et les polyamides résultant de la polycondensation de m-xylylène diamine avec l'acide adipique (MXD6).

Pour des raisons de coût et/ou pour des raisons pratiques (par exemple pour conférer au matériau d'emballage d'autres propriétés souhaitées), il est souvent nécessaire d'associer ces polymères avec d'autres polymères, tels que par exemple les polymères de l'éthylène, du propylène, du chlorure de vinyle et les polyalkylènes téréphtalates. Ces associations se matérialisent par la présence, dans le matériau d'emballage formé, d'une pluralité de couches des polymères choisis avec interposition éventuelle d'adhésifs convenables. Des structures typiques de pareils matériaux dans lesquels le polymère barrière est le MXD6 et l'autre polymère le polyéthylène téréphtalate (PET) ont été décrites par exemple dans les demandes de brevets EP-A-0161625 et EP-A-0186154 (MITSUBISHI GAS CHEMICAL) et sont particulièrement applicables à la fabrication de récipients (bouteilles, flacons, ...).

Des récipients de ce type, dans lesquels une couche imperméable, constituée d'un mélange de PET et de polymère barrière (MXD6), est interposée entre deux couches à base de PET, notamment pour améliorer l'adhérence entre les couches après l'orientation biaxiale conférée par le moulage par soufflage de la paraison préformée, ont été décrits dans le document EP-B-0092979 (YOSHINO KOGYOSHO).

Pour des raisons de coût et d'aspect final du matériau d'emballage, la teneur en MXD6 de ces mélanges est généralement inférieure à 10 % en poids.

Pour pouvoir diminuer encore la teneur en MXD6 tout en améliorant simultanément l'imperméabilité à l'oxygène, il a été proposé d'incorporer, dans le MXD6, un carboxylate d'un métal tel que le cobalt [demande de brevet EP-A-0301719 (MB GROUP)]. On suppose que le cobalt catalyse l'oxydation du MXD6, additionnant à la barrière physique que constitue le mélange des polymères, un effet de "barrière chimique" à l'oxygène (Revue des Industries Agro-Alimentaires, numéro du 9 au 23 avril 1990, pages 34 et 35; La Recherche, volume 21, n° 222, juin 1990, page 752).

Cette solution ne s'est pas révélée complètement satisfaisante, parce que le MXD6 dans lequel le carboxylate de cobalt est incorporé contient des composés phosphorés. Ces composés sont incorporés au cours de la polymérisation [voir par exemple demande de brevet DE-A-2341895 (TOYOBO); demandes de brevets japonais publiées (Kokai) sous les numéros 74/53945 (TOYOBO) et 78/125460 (TOYOBO); demande de brevet EP-A-0361636 (AMOCO CORP.)] et/ou ajoutés lors de la stabilisation du MXD6 [voir par exemple demande de brevet DE-A-1570609 (BAYER AG); brevet GB-A-1146157 (DU PONT); demande de brevet japonais (Kokoku) publiée sous le numéro 73/20220 (TOYO SPINNING); demande de brevet japonais (Kokai) publiée sous le numéro 84/87132 (MITSUBISHI CHEMICAL)]. Ces composés phosphorés sont généralement choisis parmi les acides (hypo)phosphoreux, (hypo)phosphorique, phosphinique et phosphonique, leurs sels et esters et le plus souvent parmi les (hypo)phosphites de sodium, de manganèse, de calcium et de zinc. Un composé phosphoré fréquemment utilisé est l'hypophosphite de sodium.

D'une manière générale, ces composés phosphorés se retrouvent dans le MXD6, présent dans les matériaux d'emballage mentionnés plus haut, à des concentrations, exprimées en phosphore, pouvant atteindre 500 ppm, le plus souvent comprises entre 150 et 400 ppm. Le produit Reny 6001, par exemple, qui est le MXD6 utilisé typiquement pour fabriquer les matériaux d'emballage selon la demande de brevet EP-A-0301719 (page 9, lignes 10 à 13) contient 200 à 350 ppm de phosphore.

Cette présence, relativement abondante, du composé phosphoré dans le MXD6 est une source d'inconvénients. Elle interfère avec la fonction de "barrière chimique" exercée par le catalyseur d'oxydation à base de carboxylate de cobalt, impliquant que ce dernier, coûteux et écologiquement douteux, soit incorporé dans le MXD6 en quantités relativement importantes. Par ailleurs, lorsque le composé phosphoré est réducteur, ce qui est fréquemment le cas, et lorsque le MXD6 est associé au PET pour fabriquer le matériau d'emballage, des réactions parasites entre le composé phosphoré et les résidus de catalyseurs de polycondensation du PET (sels organiques d'antimoine notamment) engendrent des colorations dans le

matériau d'emballage, particulièrement inacceptables dans le cas où il s'agit d'articles destinés au conditionnement de liquides (boissons gazeuses).

Enfin, compte tenu d'effets antagonistes exercés par le composé phosphoré et par le carboxylate de cobalt sur l'oxydation du MXD6, il peut se dérouler un long délai appelé ci-après "période d'induction" entre le moment où le matériau d'emballage est façonné et le moment où son imperméabilité à l'oxygène a atteint une valeur acceptable. Pendant cette période d'induction, qui peut atteindre par exemple 30 jours (demande de brevet EP-A-0301719, page 8, lignes 7 à 9), la perméabilité à l'oxygène initiale diminue progressivement. On pallie cet inconvénient par des techniques coûteuses de vieillissement (ageing) ou en incorporant davantage de catalyseur d'oxydation (idem., page 8, lignes 2 à 7).

La présente invention vise à fournir des compositions polymériques présentant de bonnes propriétés barrière à l'oxygène sans présenter les inconvénients mentionnés ci-dessus. Dans un autre de ses aspects, l'invention vise à fournir des matériaux d'emballage, imperméables à l'oxygène, façonnés à partir de ces compositions.

L'invention concerne dès lors, à titre principal, des compositions comprenant un polyamide (PA) résultant de la polycondensation d'un acide $\alpha,\omega$-dicarboxylique aliphatique avec des xylylènes diamines et un sel d'un métal choisi parmi les métaux de transition du groupe VIII A du Tableau Périodique des éléments, le manganèse, le zinc et le cuivre, le polyamide (PA) contenant moins de 150 ppm de phosphore.

Le polyamide (PA) contenu dans les compositions selon l'invention est synthétisé de manière connue par réaction de polycondensation de xylylène diamine, contenant plus de 60 % molaires et, de préférence, plus de 90 % molaires de l'isomère méta de cette diamine (le solde éventuel étant constitué par l'isomère para), et d'un acide $\alpha,\omega$-dicarboxylique aliphatique. Cet acide est généralement un acide à chaîne linéaire, contenant de 6 à 12 atomes de carbone, que l'on peut représenter par la formule $HOOC\ (CH_2)_n\ COOH$ dans laquelle $4 \leqq n \leqq 10$. Des exemples d'acides utilisables sont les acides adipique, subérique, sébacique, undécanedioïque et dodécanedioïque. L'acide adipique est préféré. Le polyamide préféré dans le cadre de la présente invention est obtenu par réaction de condensation de m-xylylène diamine avec l'acide adipique (MXD6).

Le polyamide (PA) contenu dans les compositions selon l'invention doit contenir moins de 150 ppm de phosphore. A cet effet, la synthèse et/ou la stabilisation de ce PA s'effectuent en l'absence substantielle des composés phosphorés mentionnés plus haut.

La terminologie "absence substantielle" implique, non seulement l'absence totale desdits composés, mais aussi que ces composés puissent être absents lors de la synthèse du PA et présents en très faibles quantités lors de sa stabilisation; ou présents en très faibles quantités lors de la synthèse du PA et absents lors de sa stabilisation; ou présents en très faibles quantités à la fois lors de la synthèse et lors de la stabilisation du PA, le critère essentiel étant que ne subsiste, dans le PA, lorsqu'il est incorporé dans les compositions selon l'invention, qu'une concentration, exprimée en phosphore, inférieure à 150 ppm, de préférence inférieure à 100 ppm.

Les meilleurs résultats ont été enregistrés avec les concentrations de phosphore dans ledit PA les plus faibles, c'est-à-dire des concentrations inférieures à 50 ppm et même inférieures au seuil de détectabilité de cet élément par colorimétrie (5 ppm environ).

Les compositions selon l'invention contiennent aussi un sel d'un métal (M) choisi parmi les métaux de transition du groupe VIII A du Tableau Périodique (version publiée dans Kirk-Othmer Encyclopedia of Chemical Technology, second completely revised edition, volume 8, page 94, Interscience Publishers 1965) ainsi que parmi le manganèse, le zinc et le cuivre. Les métaux de transition peuvent être choisis parmi les périodes 4, 5 et 6 du groupe VIII A, à savoir, respectivement, le fer, le cobalt et le nickel; le ruthénium, le rhodium et le palladium; l'osmium, l'irridium et le platine. Ces métaux sont généralement présents sous forme de cations dans un état d'oxydation positif inférieur à l'état d'oxydation maximale. Les métaux préférés sont le cobalt et le rhodium, le premier étant tout particulièrement préféré. Ces métaux sont incorporés dans les compositions selon l'invention sous la forme d'un sel inorganique ou organique. Des sels inorganiques convenables parce que notamment aisés à acquérir et à mettre en oeuvre sont par exemple les halogénures et des sels organiques convenables pour les mêmes raisons sont par exemple les carboxylates de ces métaux. L'incorporation de ces sels dans les compositions selon l'invention peut se faire par tout moyen connu et notamment par broyage à sec, par mélange au fondu, par exemple dans une extrudeuse, ou encore par mélange à reflux du PA avec une solution du sel dans un solvant approprié.

La quantité de sel de métal (M) présente dans les compositions de l'invention est exprimée en pourcentage en poids de métal par rapport au PA présent dans ces compositions. Elle est conditionnée par la teneur finale en métal (M) que l'on souhaite incorporer dans le matériau d'emballage façonné à partir de la composition (voir ci-après) et est inférieure à 0,5 % en poids de métal (M) par rapport au poids de PA.

Les meilleurs résultats ont été obtenus pour des teneurs en métal (M) comprises entre 0,01 et 0,2 % en poids par rapport au poids de PA.

Outre le polyamide (PA) et le sel de métal (M), les compositions selon l'invention peuvent contenir d'autres constituants.

Parmi ces autres constituants, on peut citer d'autres polymères, tels que les polymères de l'éthylène, les polymères du propylène, les polymères du chlorure de vinyle et les polyesters dérivés d'un acide dicarboxylique et d'un diol. Les polyesters dérivés d'acide ou d'anhydride phtalique à titre d'acide dicarboxylique et d'un alkylène glycol, par exemple l'éthylène glycol à titre de diol, conviennent bien; parmi ces polyesters, on préfère le poly(éthylène téréphtalate) (PET) résultant de la polycondensation d'acide (anhydride) téréphtalique et d'éthylène glycol, parce que ce polymère est répandu et bien accepté comme matériau d'emballage alimentaire et que ses propriétés barrière sont avantageusement complémentaires de celles du PA.

Dans le cas particulier du PET comme "autre polymère", le métal (M) peut, notamment lorsqu'il s'agit du cobalt, y être présent, en quantités appropriées, à titre de résidu catalytique. Ledit PET peut alors constituer lui-même la (seule) source de métal (M) des compositions de l'invention.

La teneur des compositions selon l'invention en ces éventuels "autres polymères" peut varier dans une large mesure en fonction notamment de l'usage du matériau d'emballage façonné à leur intervention, des propriétés barrière que l'on compte conférer à ce dernier, de la durée de conservation de son contenu, de facteurs économiques, etc.

Cette teneur des compositions en "autres polymères" peut être exprimée par le rapport de leur poids au poids de PA présent dans les compositions. Ce rapport peut s'étendre le plus généralement de 5/100 à 100/1, de préférence de 50/100 à 50/1.

Les meilleurs résultats ont été obtenus avec des compositions constituées essentiellement d'un mélange de PET (à titre d'"autre polymère") et de PA, dans des rapports en poids respectifs compris entre 5/1 et 35/1, tout particulièrement entre 15/1 et 30/1, ces compositions contenant en outre les quantités, mentionnées plus haut, de cobalt à titre de métal (M).

L'incorporation de l'"autre polymère" dans les compositions peut se faire par tout moyen connu tel que, par exemple, mélange à sec, par cobroyage, par extrusion, etc. Lorsque l'"autre polymère" est présent en excès par rapport au PA constitutif des compositions, il peut être recommandable d'incorporer le PA, contenant déjà le sel de métal (M), par la technique conventionnelle dite du "mélange-maître" (master-batch).

Les compositions selon l'invention peuvent également contenir, en général dans des quantités inférieures à 10 % de leur poids total, d'autres ingrédients conventionnels tels que des stabilisants, des polyamides exempts de phosphore, des stabilisants, des éventuels autres polymères, des pigments, des colorants, des charges, etc.

Dans un autre de ses aspects, l'invention concerne des matériaux d'emballage façonnés à partir des compositions décrites ci-dessus.

Des exemples non limitatifs de matériaux d'emballage façonnés à partir de ces compositions sont :

- les feuilles et les films;
- les récipients : bouteilles, flacons, boîtes;
- les sacs et sachets.

Ces matériaux peuvent avoir une structure monocouche ou une structure multicouche. Ils peuvent être façonnés par moulage des compositions décrites plus haut selon toutes les techniques connues : moulage par injection; moulage par soufflage suivi d'étirage; moulage par extrusion; moulage par extrusion-soufflage; moulage par thermoformage.

Dans le cas où l'on souhaite façonner un matériau à structure multicouche, on peut utiliser les techniques de coextrusion, de coinjection ou de laminage. Enfin, les feuilles et films préformés peuvent eux-mêmes être transformés en récipients par chauffage avec étirage et transformés en sacs par étirage suivi de thermoscellage.

Les matériaux d'emballage complexes à structure multicouche selon l'invention comprennent au moins une couche (A) constituée des compositions décrites plus haut et au moins une autre couche (B) constituée d'un polymère thermoplastique choisi parmi les "autres polymères" mentionnés ci-avant en rapport avec les compositions selon l'invention et parmi les polycarbonates et les polyamides aliphatiques. Un polymère thermoplastique préféré est le PET.

La liaison entre les couches constitutives de ces matériaux d'emballage complexes peut être renforcée par l'interposition de couches (C) à base de résines adhésives (couches adhésives).

Des résines dont l'utilisation est connue à cette fin sont par exemple : les polyoléfines modifiées par des monomères polaires, telles que les polymères du propylène et les polymères de l'éthylène greffés

d'anhydride maléique; les copolymères de l'éthylène avec l'acétate de vinyle et les copolymères de l'éthylène avec l'acide acrylique; les ionomères dérivés de sels de métaux alcalins ou alcalino-terreux et de copolymère de l'éthylène avec l'acide acrylique ou avec des acrylates.

A titre d'exemples de matériaux d'emballage complexes à structure multicouche, on peut citer :

- les matériaux à deux couches dont une couche est constituée de compositions selon l'invention [couche (A)] et dont l'autre couche est constituée d'un polymère thermoplastique tel que défini ci-dessus [couche (B)];
- les matériaux à trois couches dans lesquels une couche à base de résines adhésives [couche (C)] est interposée entre les couches (A) et (B);
- les matériaux à trois couches (M1) dans lesquels une couche (A) est interposée entre deux couches (B);
- les matériaux à trois couches (M2) dans lesquels une couche (B) est interposée entre deux couches (A);
- les matériaux à cinq couches (M3) dans lesquels trois couches (B) et deux couches (A) se succèdent alternativement;
- les matériaux à cinq couches dans lesquels les couches (A) et (B) des matériaux à trois couches (M1) et (M2) sont respectivement séparées les unes des autres par des couches (C);
- les matériaux à neuf couches dans lesquels les couches alternées (A) et (B) des matériaux (M3) sont séparées les unes des autres par des couches (C).

Que les matériaux d'emballage selon l'invention soient à structure monocouche (ce qui constitue évidemment la solution la plus économique) ou à structure multicouche, l'épaisseur de la (des) couche(s) constitutive(s) (A) peut varier de 20 à 200 microns (mµ) environ, pour les plus flexibles, tels que les feuilles et films et de 200 à 1200 microns environ, pour les plus rigides (structures autoportantes à vide telles que bouteilles, flacons, récipients, ...).

Grâce à l'invention, il est possible de façonner des matériaux d'emballage dans lesquels la couche (A) ne contient qu'une quantité extrêmement faible de métal (M). Cette quantité est généralement inférieure à 50 ppm, c'est-à-dire inférieure à celles retrouvées conventionnellement dans ce type de matériau (demande de brevet EP-A-0301719, page 6, lignes 26 à 28; page 10, tableau 1; page 16, tableau 3). De préférence, cette quantité est inférieure à 40 ppm. D'excellents résultats ont même été constatés pour des teneurs de la couche (A) en métal (M) inférieures à 30 ppm.

Les exemples suivants servent à illustrer l'invention, avec référence à la Figure unique annexée. Cette Figure est un diagramme bidimensionnel dans lequel le temps, exprimé en jours, est représenté en abscisse et dans lequel la perméabilité à l'oxygène

$$(P_{O_2}),$$

exprimée en $cm^3\ O_2/m^2$.jour.bar ($cm^3\ O_2/m^2$.d.b.), est représentée en ordonnée. Les courbes (1) et (2R) sont représentatives, respectivement, des

$$P_{O_2}$$

des flacons façonnés selon les exemples 1 et 2R.

Exemple 1

1. Préparation d'un "mélange-maître" à partir de MXD6 et de néodécanoate de cobalt.

On mélange pendant 30 minutes dans un mélangeur à fût :

- un polyamide MXD6, obtenu par réaction de condensation de m-xylylène diamine et d'acide adipique sans adjonction d'hypophosphite de sodium, de viscosité relative (mesurée sur 100 ml d'une solution d'acide sulfurique à 95 % contenant 1 g de polymère) valant 1,47; ce polyamide est séché sous un vide de 700 mm de mercure (93,3 kPa) pendant 18 heures à 135 °C.
- du néodécanoate de cobalt commercialisé par la firme SHEPHERD sous forme de pastilles contenant 20,5 % en poids de cobalt, broyées pour obtenir une poudre fine.

Pour la réalisation de l'exemple, le mélange contient 99,75 % en poids de MXD6 et 0,25 % en poids de néodécanoate de cobalt (mélange 1).

2. Granulation du mélange

Le mélange est extrudé sans stabilisant phosphoré de mise en oeuvre, avec un débit de 3 kg par heure, dans une extrudeuse TROESTER EP 30 dont la vis tourne à 55 tours/minute. La température de la matière à la sortie de l'extrudeuse est 270 °C. Le jonc extrudé est refroidi sur tapis roulant et granulé.

3. Préparation de la composition polymérique finale

Le mélange 1 est incorporé dans du polyéthylène téréphtalate (PET) commercialisé sous la dénomination POLYCLEAR T 86 par HOECHST (ne contenant pas de cobalt), à raison de 5 % en poids dans le PET.

4. Moulage d'un matériau d'emballage

Après séchage, les granules obtenus sont introduits dans une machine d'injection-soufflage NISSEI ASB 50 MH où ils sont fondus et injectés pour obtenir une préforme à 270 °C dans la zone de compression et d'injection. Le moule est refroidi avec de l'eau à 10 °C et on obtient une préforme amorphe. Après conditionnement thermique de la préforme à plus ou moins 95 °C, on bioriente la préforme par soufflage dans un moule refroidi à 10 °C.

Le volume du flacon obtenu est 1,5 l et l'épaisseur de la paroi de 300 mμ environ.

La perméabilité à l'oxygène

$$(P_{O_2})$$

du flacon est mesurée dans un appareil OXTRAN fabriqué par Mocon (USA) à 25 °C (humidités relatives 0 % à l'intérieur du flacon et 50 % à l'extérieur).

La valeur de perméabilité, exprimée en $cm^3$ $O_2$/ $m^2$.jour.bar est mentionnée dans le tableau ci-après qui rassemble d'autres éléments caractéristiques des exemples.

La courbe (1) (voir Figure) montre que cette

$$P_{O_2}$$

est constante et acquise dès moulage du flacon, sans période d'induction.

5. Examen des propriétés optiques du flacon

On a aussi examiné les propriétés optiques du flacon façonné à partir de la composition de l'exemple, plus précisément les propriétés représentatives de sa transparence à savoir :

- la "transmission totale" ("total transmission")(T) mesurée selon la norme ASTM D 1003 et exprimée en % ;
- le "trouble" ("haze")(H) mesuré selon la norme ASTM D 1003 et exprimé également en % .

Les valeurs suivantes ont été mesurées :

- % T : 88
- % H : 8

Exemple 2R

Cet exemple est fourni à titre de comparaison.

On prépare une "composition polymérique finale" comme indiqué aux points 1 à 3 de l'exemple 1 sauf que l'on utilise à titre de MXD6 le produit, commercialisé sous la dénomination Reny 6001 par MITSUBISHI GAS CHEMICAL, contenant 260 ppm de phosphore (P) et que 97,5 % en poids de ce MXD6 sont mélangés avec 2,5 % en poids de néodécanoate de cobalt (mélange 2).

Un flacon est moulé à partir de cette composition comme indiqué au point 4 de l'exemple 1. La

$$P_{O_2}$$

mesurée après 180 jours est du même ordre que la

$$P_{O_2}$$

du flacon moulé à partir de la composition de l'exemple 1, mais seulement après 30 jours de période d'induction (voir Figure) et pour une teneur en cobalt environ 10 fois plus élevée (voir Tableau ci-après).

Les propriétés optiques du flacon ainsi moulé ont été examinées de la manière expliquée au point 5 de l'exemple 1. Les valeurs suivantes ont été mesurées :

- % T : 79
- % H : 15

La transmission totale et le trouble sont donc respectivement inférieure et supérieur à ceux mesurés sur le flacon de l'exemple 1 et les propriétés optiques du flacon de l'exemple 2R sont donc moins bonnes que celles du flacon de l'exemple 1.

**Tableau**

| Exemple | | 1 | 2R |
|---|---|---|---|
| Mélange | | 1 | 2 |
| Composition finale | PET (% pds) | 95 | 95 |
| | MXD6 (% pds) | 5 | 5 |
| | Co (ppm) | 25 | 240 |
| | P (ppm) | - | 260 |
| $P_{O_2}$ (après 180 jours) | | < 0,05 | < 0,05 |

## Revendications

1. Compositions comprenant un polyamide (PA) résultant de la polycondensation d'un acide α,ω-dicarboxylique aliphatique, avec des xylylènes diamines et un sel d'un métal (M) choisi parmi les métaux de transition du groupe VIII A du Tableau Périodique des éléments, le manganèse, le zinc et le cuivre, présent en des proportions inférieures à 0,5 % en poids par rapport au PA, caractérisées en ce que le polyamide (PA) contient moins de 150 ppm de phosphore.

2. Compositions selon la revendication 1, caractérisées en ce que le polyamide (PA) contient moins de 50 ppm de phosphore.

3. Compositions selon la revendication 1, caractérisées en ce que la teneur en phosphore du polyamide (PA) est en-dessous du seuil de détectabilité par colorimétrie.

4. Compositions selon la revendication 1, caractérisées en ce que le polyamide (PA) résulte de la réaction de condensation de m-xylylène diamine avec l'acide adipique.

5. Compositions selon l'une quelconque des revendications 1 à 4, caractérisées en ce que le métal (M) est le cobalt.

6. Compositions selon l'une quelconque des revendications 1 à 5, caractérisées en ce que le sel de métal (M) est un carboxylate de cobalt.

7. Compositions selon l'une quelconque des revendications 1 à 6, caractérisées en ce qu'elles contiennent en outre un autre polymère choisi parmi les polyesters dérivés d'un acide dicarboxylique et d'un diol.

8. Compositions selon la revendication 7, caractérisées en ce que le rapport entre le poids de l'autre polymère et le poids de polyamide (PA) est compris entre 5/1 et 35/1.

9. Matériau d'emballage façonné à partir des compositions selon les revendications 1 à 8.

10. Matériau d'emballage selon la revendication 9 à structure monocouche.

11. Matériau d'emballage selon la revendication 9 à structure multicouche dont au moins une couche est à base de compositions selon les revendications 1 à 8.

12. Matériau d'emballage selon l'une quelconque des revendications 9 à 11 façonné en forme de récipient, tel qu'une bouteille.

13. Matériau d'emballage selon l'une quelconque des revendications 9 à 12, caractérisé en ce que la couche à base de compositions selon les revendications 1 à 8 contient moins de 50 ppm de métal (M).

14. Matériau d'emballage caractérisé par la présence d'au moins une couche à base d'une composition contenant environ 5 % en poids d'un polyamide, contenant moins de 150 ppm de phosphore, et résultant de la réaction de condensation de m-xylylène diamine avec l'acide adipique et environ 95 % en poids de poly(éthylène téréphtalate), ladite couche contenant moins de 50 ppm de cobalt, ayant une épaisseur de 200 à 1200 microns et une perméabilité à l'oxygène constante et inférieure à 0,05 $cm^3$ d'oxygène/$m^2$.jour.bar (mesurée dans un appareil OXTRAN, à 25 °C, avec une humidité relative de 0 % à l'intérieur du flacon et de 50 % à l'extérieur) pendant au moins les 180 premiers jours qui suivent le façonnage du matériau.

## Claims

1. Compositions comprising a polyamide (PA) resulting from the polycondensation of an aliphatic $\alpha,\omega$-dicarboxylic acid with xylylenediamines and a salt of a metal (M) chosen from the transition metals of group VIIIA of the Periodic Table of the elements, manganese, zinc and copper, present in proportions lower than 0,5 % by weight relative to the polyamide, characterised in that the polyamide (PA) contains less than 150 ppm of phosphorus.

2. Compositions according to Claim 1, characterised in that the polyamide (PA) contains less than 50 ppm of phosphorus.

3. Compositions according to Claim 1, characterised in that the phosphorus content of the polyamide (PA) is below the threshold of detectability by colorimetry.

4. Compositions according to Claim 1, characterised in that the polyamide (PA) results from the condensation reaction of m-xylylenediamine with adipic acid.

5. Compositions according to any one of Claims 1 to 4, characterised in that the metal (M) is cobalt.

6. Compositions according to any one of Claims 1 to 5, characterised in that the metal (M) salt is a cobalt carboxylate.

7. Compositions according to any one of Claims 1 to 6, characterised in that they additionally contain another polymer chosen from polyesters derived from a dicarboxylic acid and from a diol.

8. Compositions according to Claim 7, characterised in that the ratio of the weight of the other polymer to the weight of polyamide (PA) is between 5/1 and 35/1.

9. Packaging material made from the compositions according to Claims 1 to 8.

10. Packaging material according to Claim 9 of monolayer structure.

11. Packaging material according to Claim 9 of multilayer structure in which at least one layer is based on compositions according to Claims 1 to 8.

12. Packaging material according to any one of Claims 9 to 11, made in the form of a container, such as a bottle.

13. Packaging material according to any one of Claims 9 to 12, characterised in that the layer based on compositions according to Claims 1 to 8 contains less than 50 ppm of metal (M).

14. Packaging material characterised by the presence of at least one layer based on a composition containing approximately 5 % by weight of a polyamide containing less than 150 ppm of phosphorus and resulting from the condensation reaction of m-xylylenediamine with adipic acid and approximately 95 % by weight of poly(ethylene terephthalate), the said layer containing less than 50 ppm of cobalt, having a thickness of 200 to 1200 microns and an oxygen permeability which is constant and lower than 0.05 $cm^3$ of oxygen/$m^2$ day bar (measured in an OXTRAN device, at 25 °C, with a relative humidity of 0 % inside the flask and of 50 % outside) for at least the first 180 days which follow the making of the material.

**Patentansprüche**

1. Zusammensetzungen, die ein Polyamid (PA), das sich aus der Polykondensation einer aliphatischen $\alpha,\omega$-Dicarbonsäure mit Xylylendiaminen ergibt, und ein Salz eines Metalls (M), das unter den Übergangsmetallen der Gruppe VIII A des Periodensystems der Elemente, Mangan, Zink und Kupfer ausgewählt ist, und in Anteilen niedriger als 0,5 Gew.-%, bezogen auf PA, vorhanden ist, enthalten, dadurch gekennzeichnet, daß das Polyamid (PA) weniger als 150 ppm Phosphor enthält.

2. Zusammensetzungen gemäß Anspruch 1, dadurch gekennzeichnet, daß das Polyamid (PA) weniger als 50 ppm Phosphor enthält.

3. Zusammensetzungen gemäß Anspruch 1, dadurch gekennzeichnet, daß der Gehalt an Phosphor des Polyamids (PA) unterhalb der Nachweisgrenze durch Kolorimetrie liegt.

4. Zusammensetzungen gemäß Anspruch 1, dadurch gekennzeichnet, daß sich das Polyamid (PA) aus der Kondensationsreaktion von m-Xylylendiamin mit Adipinsäure ergibt.

5. Zusammensetzungen gemäß irgendeinem der Ansprüche 1 bis 4, dadurch gekennzeichnet, daß das Metall (M) Kobalt ist.

6. Zusammensetzungen gemäß irgendeinem der Ansprüche 1 bis 5, dadurch gekennzeichnet, daß das Salz des Metalls (M) ein Kobaltcarboxylat ist.

7. Zusammensetzungen gemäß irgendeinem der Ansprüche 1 bis 6, dadurch gekennzeichnet, daß sie außerdem ein anderes Polymer enthalten, das unter den von einer Dicarbonsäure und einem Diol abgeleiteten Polyestern ausgewählt ist.

8. Zusammensetzungen gemäß Anspruch 7, dadurch gekennzeichnet, daß das Verhältnis zwischen dem Gewicht des anderen Polymeren und dem Gewicht des Polyamids (PA) zwischen 5/1 und 35/1 liegt.

9. Verpackungsmaterial, das aus Zusammensetzungen gemäß den Ansprüchen 1 bis 8 hergestellt ist.

10. Verpackungsmaterial gemäß Anspruch 9 mit einschichtiger Struktur.

**11.** Verpackungsmaterial gemäß Anspruch 9 mit mehrschichtiger Struktur, von dem wenigstens eine Schicht auf Zusammensetzungen gemäß den Ansprüchen 1 bis 8 basiert ist.

**12.** Verpackungsmaterial gemäß irgendeinem der Ansprüche 9 bis 11, das in Form eines Behälters, wie einer Flasche, hergestellt ist.

**13.** Verpackungsmaterial gemäß irgendeinem der Ansprüche 9 bis 12, dadurch gekennzeichnet, daß die Schicht auf der Basis von Zusammensetzungen gemäß den Ansprüchen 1 bis 8 weniger als 50 ppm Metall (M) enthält.

**14.** Verpackungsmaterial, gekennzeichnet durch die Gegenwart von wenigstens einer Schicht auf der Basis einer Zusammensetzung, die ungefähr 5 Gew.-% eines Polyamids enthält, das weniger als 150 ppm Phosphor enthält und sich aus der Kondensationsreaktion von m-Xylylendiamin mit Adipinsäure und ungefähr 95 Gew.-% Poly(ethylenterephthalat) ergibt, wobei die besagte Schicht weniger als 50 ppm Kobalt enthält, eine Dicke von 200 bis 1200 Mikrometern besitzt und eine Sauerstoffpermeabilität aufweist, die konstant und niedriger als 0,05 $cm^3$ Sauerstoff/$m^2$•Tag•bar ist (gemessen mit einem OXTRAN-Gerät, bei 25 °C, mit einer relativen Feuchtigkeit von 0% im Innern des Kolbens und von 50% außerhalb), während wenigstens der ersten 180 Tage, die der Herstellung des Materials folgen.

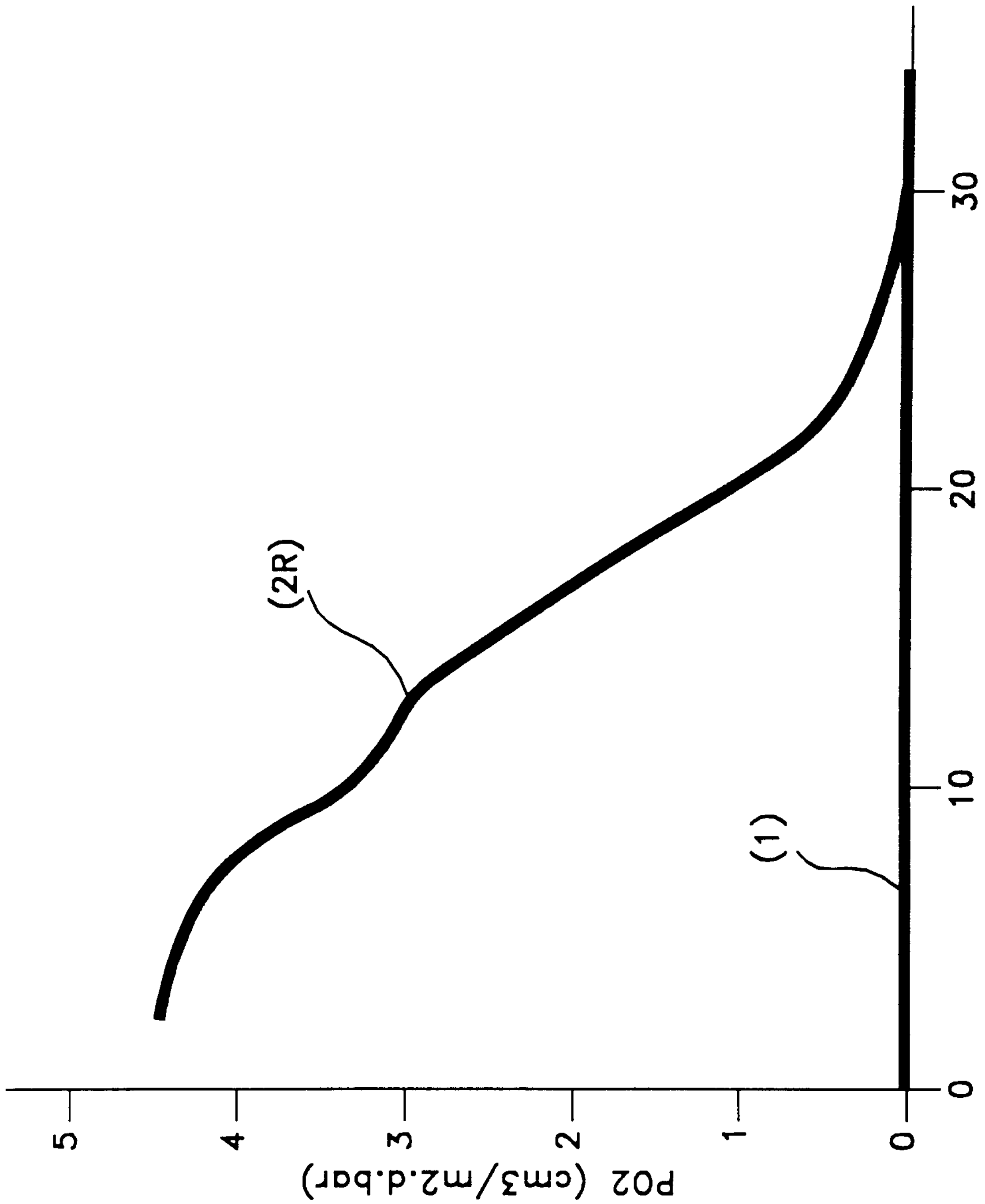
PO2 (cm3/m2.d.bar)
5
4
3
2
1
0
0
10
20
30
Temps, jours
(2R)
(1)